# EUROPÄISCHE PATENTANMELDUNG

(11) **EP 2 332 886 A2**
(43) Veröffentlichungstag der Anmeldung: **15.06.2011**
(21) Anmeldenummer: 11151629.0
(22) Anmeldetag: 08.02.2007
(51) Int. Cl.: C02F 1/32

(54) **Reinigbare Wendelmodule für die Bestrahlung von Fluiden**

(30) Priorität: 20.02.2006 DE 102006008125
(62) Teilanmeldung aus: 07703351.2
(71) Anmelder: Bayer Technology Services GmbH, 51368 Leverkusen (DE)
(72) Erfinder: Kauling, Jörg, 51427, Bergisch Gladbach (DE); Jurgait, Michael, 51503, Rösrath (DE); Justen, Heinz, 53894, Mechernich (DE); Dr. Schmidt, Sebastian, 42781, Haan (DE)

(57) **Zusammenfassung**

Die Wendelmodule für die Bestrahlung von Fluiden umfassen ein UV-transparentes Hüllrohr. Innerhalb eines Rohres (2) befindet sich eine Strahlenquelle (3) und zwischen dem Rohr (2) und der Wendel (1) bildet sich ein wendelförmiger Kanal, der ein durchströmendes Fluid in eine helikale Strömung zwingt. Eine Relativbewegung der einzelnen Bauteile ermöglicht eine mechanische Reinigung in situ. Das Reaktorgehäuse kann von einem Kühlfluid umspült werden. Die Bestrahlungsmodule werden dadurch hergestellt, dass der Mantel des Reaktorgehäuses durch ein Innenhochdruckumformverfahren in einem Arbeitsgang hergestellt und Anschlussteile, Bodenabschluss und Strömungsleitgeometrien mit einem Laserschweißverfahren druckdicht mit dem Mantel verbunden werden.

## Beschreibung

Die Sterilisation oder Keimreduzierung in flüssigen Medien ist in vielen Prozessen ein wichtiger Verfahrensschritt. Kontaminationen mit aktiven, das heißt vermehrungsfähigen, biologischen Material wie Mikroorganismen oder Viren stellt oft eine Gefährdung der Produktsicherheit dar, der wirkungsvoll begegnet werden muss. Daneben gibt es Anwendungen, in denen die Kontaminanten selbst das Produkt darstellen und deren Inaktivierung eine gewünschte Produktmodifikation darstellt. Zu solchen Produkten zählen zum Beispiel bestimmte Impfstoffe.

Die Keimreduktion durch Inaktivierung mit ultravioletter Strahlung, besonders mit UV-C Strahlung und speziell bei 254 nm ist seit langem bekannt und wird vielfach praktisch angewandt. Beispiele sind neben Oberflächenentkeimungen auch die Behandlung flüssiger Medien wie Trink- und Abwässer.

Eine wesentliche technische Herausforderung ist dann gegeben, wenn neben den zu inaktivierenden Keimen auch Wertstoffe enthalten sind die zu einem gewissen Grad auch durch die Strahlung geschädigt werden können. Solche Anforderungen sind typisch für die Entkeimung im Bereich der Lebensmittel und von pharmazeutischen Wirkstoffen, wie beispielsweise Proteinen. Zusätzlich Schwierigkeiten ergeben sich dann, wenn die Trübung der prozessierten Flüssigkeit im Bereich der UV-C Strahlung hoch und damit die Eindringtiefe der inaktivierenden Strahlung gering ist. Solche Anwendungen verlangen nach technischen Systemen, die trotz der hohen Trübung eine homogene Bestrahlung, das heißt eine enge Dosisverteilung, realisieren können. Bei durchströmten Apparaten ist hier zusätzlich eine gewisse Verweilzeit, gleichbedeutend mit Bestrahlungszeit, vorzusehen. Die systemspezifische Verweilzeitverteilung führt dabei auch zu einer breiten, das heißt inhomogenen, Dosisverteilung in der Flüssigkeit.

Zur Lösung dieser Probleme sind nach dem Stand der Technik verschiedene Möglichkeiten zur Quervermischung in bestrahlten, durchströmten Apparaten bekannt. Die einfachste Lösung, die Erzeugung einer turbulenten Strömung, führt zwar zu einer guter Quervermischung, ist aber in der Praxis oft schwierig zu realisieren, da die benötigte hohe Flüssigkeitsgeschwindigkeit zusammen mit der notwendigen Bestrahlungszeit zu unpraktikabel langen Apparaten führt. Eine Lösung bei langsamerer, laminarer Strömung sieht dabei den Einbau von Mischelementen in die Strömungsführung vor [US Patent 6,190,608, EP Patent 0910417]. Durch die Einbauten (statische Mischer) wird die laminare Strömung zwangsvermischt. Eine andere Lösung kommt ohne Einbauten aus: durch eine wendelförmige Strömungsführung werden Sekundärströmungen induziert, die zu der gewünschten Quervermischung führen. Dieser strömungstechnische Effekt ist aus der Literatur bekannt [VDI-Wärmeatlas, Kapitel Gc, Springer Verlag, Berlin Heidelberg 2002] und wird als Lösung für die genannte Anwendung beschrieben [Patente WO 02/38502, WO 02/38191, EP 1464342]. In einer besonders bevorzugten Form wir ein Schlauch mit Wendelprofil formschlüssig auf ein Quarzglasrohr aufgebracht. Hierdurch entsteht ein Modul mit einem wendelförmigen Kanal, der von innen durch das Quarzglasrohr bestrahlt werden kann.

Nachteil der Lösungen nach dem Stand der Technik ist, dass die sie nur schwer zu reinigen sind. Die Reinigung der Apparate, speziell der Bestrahlungsmodule, ist eine wichtige Anforderung für Bulkprodukte, wie beispielsweise im Lebensmittelbereich, in denen eine Wiederverwendung der Module aus wirtschaftlichen Gründen gewährleistet sein muss. Bei Hochpreis-Produkten, wie Pharmazeutika, wird der mangelhaften Reinigbarkeit durch ein Einweg-Konzept bei den Bestrahlungsmodulen begegnet.

Prinzipiell lässt sich die Reinigung durch das Durchströmen des kompletten Apparates mit einer Reinigungsflüssigkeit oder durch mechanische oder chemische Reinigung der Teile nach Demontage gestalten. Die Lösungen mit Einbauten haben durch diese zusätzlich eine erhöhte Verschmutzungsneigung und sind daher aus Sicht der Reinigbarkeit den Wendelrohrmodulen nach dem Stand der Technik unterlegen. Bei den Wendelrohrmodulen, bei denen alle Bauteile möglichst formschlüssig verbunden sind, um eine optimale Strömungsführung zu ermöglichen, ist die Demontage und erneute Montage der Teile nicht möglich. Nach dem Stand der Technik ist daher ausschließlich eine Reinigung durch Durchströmung mit einer Reinigungsflüssigkeit möglich. Dies ist naturgemäß nicht während sondern nur nach der Prozessierung möglich. Daneben hat die rein chemische Reinigung eine deutlich geringere Effektivität gegenüber der mechanischen oder chemisch-mechanischen Reinigung, insbesondere bei Belagbildungen auf den Modulwänden. Zusätzlich sind chemische Reinigungsmittel selbst zumeist schädlich für nachfolgende Anwendungen. Das führt dazu, dass ein Modul nach der Reinigung auch vom Reinigungsmittel befreit werden muss, beispielsweise durch Spülen mit Wasser.

Aufgabe der vorliegenden Erfindung war es daher, ein Bestrahlungsmodul für die Bestrahlung von Fluiden zu entwickeln, welches die oben genannten Nachteile nicht aufweist.

Gegenstand der Erfindung ist daher ein reinigbares Wendelmodul (Bestrahlungsmodul) für die Bestrahlung von Fluiden umfassend ein UV-transparentes Hüllrohr (**2** oder **2a**), einer Strahlenquelle (3) und einem außen aufgebrachten Reaktorgehäuse (**1** oder **1a**), so dass ein wendelförmiger Kanal entsteht, dadurch gekennzeichnet, dass die Bauteile gegeneinander beweglich sind und ein Verfahren zu dessen Herstellung.

Ein Wendelmodul ist generell dadurch gekennzeichnet, das über ein inneres Rohr (**2** oder **2a**) ein wendelförmig ausgebildetes Bauteil formschlüssig aufgebracht ist. Innerhalb des Rohres (**2** oder **2a**) befindet sich eine Strahlenquelle (**3**) und zwischen Rohr (**2** oder **2a**) und Wendel (**1** oder **1a**) bildet sich ein wendelförmiger Kanal, der ein durchströmendes Fluid in eine helikale Strömung zwingt und so auch bei laminaren Strömungen durch Sekundärwirbel Quervermischungen erzeugt.

Das Material des Rohres, durch das die Bestrahlung der Flüssigkeit erfolgt, sollte weitgehend strahlendurchlässig sein. Geeignete Materialien sind beispielsweise Glas oder Kunststoffe. Das Material, das den Kanal ausbildet und nicht durchstrahlt wird, sollte insbesondere formstabil sein. Geeignete Werkstoffe sind beispielsweise metallische Werkstoffe, Kunststoffe, Keramiken, Glas oder Komposit-Materialien. Sollte dieses Material mindestens weitgehend transparent sein, so kann eine ergänzende oder auch alternative Bestrahlung auch durch dieses Bauteil erfolgen.

In einer bevorzugten Ausführung sind alle medienberührten Teile aus Materialien bzw. Beschichtungen hergestellt, die lebensmitteltauglich sind.

In einer Ausführung für Chemieanwendungen sind alle medienberührten Materialien aus dem Fachmann bekannten, dem Medium gegenüber inerten Materialien bzw. Beschichtungen gefertigt.

Für das Reaktorgehäuse werden vorzugsweise Werkstoffe verwendet, die auch nach der Formgebung so flexibel sind, dass ein Anpressen durch mechanische, hydrostatische oder pneumatische Kräfte möglich ist.

In einer Ausführungsform ist das erfindungsgemäße Modul dadurch gekennzeichnet, dass es eine Relativbewegung der einzelnen Bauteile, besonders des Rohres (**2** oder **2a**) und der Wendel (**1** oder **1a**), vorzugsweise durch einen mit dem Hüllrohr (**2** oder **2a**) verbundenem Innenrotor 8c, durch ermöglicht und so eine mechanische in-situ Reinigung erfolgt. An der Wendel kann dabei die berührende helikale Fläche mit einer Dichtung versehen werden. Hierdurch werden auch Materialkombinationen ermöglicht, die ansonsten keine formschlüssige Verbindung erlauben würde, beispielsweise eine Kombination aus Quarzglasrohr und Metallwendel. Auch sind statt des Quarzglasrohres Rohre aus strahlungstransparenten oder -teiltransparenten Kunststoffen einsetzbar. Durch die erfindungsgemäße Ausführung der Dichtung kann bei einer Relativbewegung ein Zerkratzen der Oberfläche verhindert werden. Ein solches Zerkratzen würde die wichtigen optischen Eigenschaften zerstören. Das prozessierte Fluid selbst kann dabei auch als Schmiermittel fungieren, ohne dass die Bestrahlung dadurch unterbunden wird. Zwischen Quarzglas und Dichtung bildet sich in diesem Fall ein dünner Film aus, der eine ausreichende Bestrahlung gewährleistet. Abgetragene Verunreinigungen und Beläge werden durch die sich drehende wendelförmige Dichtung aus dem Modul ausgetragen. Die relative Beweglichkeit durch die geschmierte Dichtung ermöglicht auch ein Abziehen der Wendel vom Rohr und eine separate Reinigung beider Bauteile.

In einer anderen erfindungsgemäßen Bauform wird die Wendel, speziell die Dichtfläche der Wendel, im Durchmesser variabel konstruiert. Hierdurch wird ermöglicht, dass die Dichtung aktiv an das Rohr gedrückt werden kann. Das kann beispielsweise durch ein Druckgefälle geschehen. Durch das Aufbringen eines höheren Druckes an der Außenseite der Wendel als auf der Innenseite wird die Dichtung auf das Rohr gedrückt. Der Druck kann auch durch das zu prozessierende Fluid selbst aufgebracht werden, das vor dem Eintritt in den Spalt zwischen Wendel (**1** oder **1a**) und Rohr (**2** oder **2a**), an der Außenseite der Wendel, das ist die Druckseite, vorbeigeführt wird. Zur Erhöhung des Druckgefälles kann vor dem Eintritt in den Spalt eine Blende vorgesehen werden, die den Druckverlust erhöht. Durch Unterschiede in der Hydrodynamik im Außen- und Innen-Bereich lassen sich zusätzlich hydrodynamische Druckkräfte erzeugen, die eine Kraft auf die Dichtung ausüben. Alternativ ist auch eine Dehnungsfähigkeit durch Verwendung von dehnbaren Polymermaterialien des inneren Rohres (**2** oder **2a**) möglich. Durch Aufbringen einer hydraulischen oder mechanischen Kraft kann das innere Rohr (**2** oder **2a**) gegen die Wendel (**1** oder **1a**) gedrückt werden.

Die Innenseite des Reaktorgehäuses wird vorzugsweise elektrochemisch poliert um auftreffende Strahlen bestmöglich in das Medium zu reflektieren.

In einer weiteren Ausführungsform ist an der Außenseite der Wendel (**1** oder **1a**) eine zusätzliche Bestrahlungskammer für das Fluid ausgebildet. Wenn die Wendel in einem transparenten Material ausgeführt ist, kann so auch die druckseitige Zuführung bestrahlt werden. Alternativ oder ergänzend kann die druckseitige Zuführung selbst in einem transparenten Material ausgeführt sein, womit eine zusätzliche Bestrahlung von außen möglich ist. Auf diese Weise wird die Bestrahlungsintensität vergrößert.

Alternativ kann die Innenseite der Wendel, sowohl mit als auch ohne Dichtauflage, strahlungsreflektierend ausgeführt sein, so dass potenziell nach außen austretende Strahlung in das Fluid zurück reflektiert wird. Dies kann durch Verwendung von reflektierenden metallischen oder Polymer-Werkstoffe oder reflektierenden Beschichtungen aus entsprechenden Material sein. Die Strahlungsreflektion an der Rückwand kann die Lichtausbeute im Fluid bis zu einem Faktor zwei erhöhen.

Der Mantel des Reaktorgehäuses (**1** oder **1a**) wird durch ein Innenhochdruckumformverfahren in einem Arbeitsgang hergestellt. Anschlussteile, Bodenabschluss und Strömungsleitgeometrien werden vorzugsweise ohne Zusatzwerkstoffe in einer Vorrichtung mit einem Laserschweissverfahren druckdicht mit dem Mantel verbunden.

Die Dichtfläche des Reaktors, die dem Hüllrohr zugewandt ist, ist vorzugsweise mit einer PTFE-Beschichtung versehen. Hierdurch wird einen geringer Reibbeiwert erzeugt, der für eine leichte manuelle Entnahme des Hüllrohres und für einen geringen Energieaufwand für die Dreh-/Hubbewegung ermöglicht. Die Abdichtung des Reaktorgehäuses gegenüber dem Hüllrohr bzw. gegenüber der Atmosphäre wird vorzugsweise an den Kopfenden durch dem Fachmann bekannte lebensmitteltaugliche Abdichtungen (häufig in die Flansche integriert) erziehlt.

In einer weiteren Ausführungsform kann das Reaktorgehäuse von einem Kühlfluid umspült werden. Hierdurch kann das Prozessmedium und das Reaktorgehäuse während des Bestrahlungsprozesses in einem zulässigen Temperaturbereich gehalten werden. Absorbierte Strahlungsanteile im Prozessmedium und Gehäuse werden als Wärmeenergie durch das Kühlfluid abgeführt.

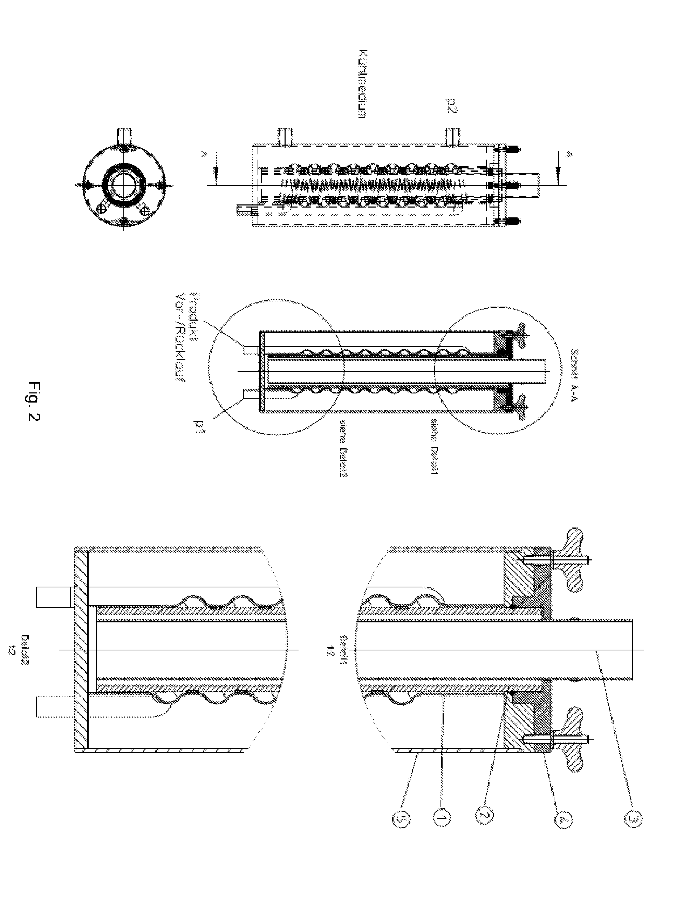

Durch das Druckgefälle von Kühlfluid zum Prozessmedium bzw. zur Atmosphäre wird in der Abbildung 2 die Abdichtung des Reaktorgehäuses (**1** oder **1a**) gegenüber dem Hüllrohr realisiert. Für die Anschlüsse von Prozessmedium und Kühlfluid können handelsübliche Kupplungen verwendet werden.

Weitere erfindungsgemäße Bauformen sehen einer Demontage für eine Reinigung der Einzelteile der Module vor. Eine solche reversible Trennung insbesondere von Hüllrohr (**2** oder **2a**) und Reaktorgehäuses (**1** oder **1a**) kann durch verschiedene Konstruktionen ermöglicht werden, so kann beispielsweise das Reaktorgehäuse (**1** oder **1a**) für die separate Reinigung vom Rohr abgezogen werden und nach Reinigung wieder übergeschoben werden. Gegebenenfalls ist hier eine Anphasung der Teile zur leichteren Montage notwendig. In der Bauform mit aktiv angedrückten Dichtungen kann im drucklosen Zustand die Wendel leicht abgenommen und wieder montiert werden. In einer dritten Variante sind sowohl das Rohr als auch die Wendel leicht konisch ausgeführt. Bevorzugt ist hier Konizität mit einem Winkel kleiner 15°, speziell kleiner 5°. Rohr (**1a**) und Wendel (**2a**) können durch diese Formgebung ineinander gesteckt werden und durch das Aufbringen einer nach innen gerichteten axialen Kraft, die die Teile weiter ineinander drückt, abgedichtet werden. Eine nach außen gerichtete Axiale Kraft ermöglicht die einfache Trennung der Bauteile für die Reinigung. Gegebenenfalls kann für den zusammengebauten Zustand eine Arretierung der beiden Teile vorgesehen sein, so dass keine kontinuierliche Kraftaufbringung notwendig wird.

In einer bevorzugten Ausführungsform ist das Wendelmodul zur einfachen Demontage und Reinigung aus nur drei Einzelteilen aufgebaut, nämlich dem Reaktorgehäuse (**1** oder **1a**), dem UVtransparenten Hüllrohr (**2** oder **2a**), und der UV-Strahlereinheit (3). Diese Komponenten können durch Klemm-/Schraubverbindungen in kurzer Zeit demontiert werden und mit einfachen Mitteln mechanisch oder nasschemisch gereinigt werden.

Eine zusätzliche Möglichkeit der Reinigung ist das physische Einbringen eines Molchs oder eines wendelförmigen Einsatzes, der durch den Kanal getrieben wird. Dies kann mechanisch, durch Druckluft oder eine Flüssigkeit geschehen. Durch das Durchlaufen des Wendelkanals kommt es zu einem mechanischen Reinigungseffekt. Dieser lässt sich auch dadurch verstärken, dass bei eingebrachtem Einsatz Rohr und Wendel gegeneinander bewegt werden und so eine zusätzliche Relativbewegung auch bezüglich des Einsatzes erzeugt wird.

Das Einbringen der notwendigen Kräfte für die Demontage oder die Relativbewegung kann sowohl manuell, als auch nicht-manuell erfolgen. Nicht manuelle Möglichkeiten sind die Krafteinwirkung mit einem Motor, bevorzugt einem elektromagnetischen Motor, oder einer Hydraulik beziehungsweise Pneumatik oder einem berührungslosen elektromagnetischen Antrieb. Die Bewegung kann sowohl kontinuierlich in eine Richtung, als auch alternierend in entgegengesetzte Richtungen stattfinden.

Anwendung findet ein solches Wendelmodul bei Pharmazeutika, biologischen Produkten, Antikörpern, Proteinen, Enzymen, Impfstoffen, Extrakten, Futtermitteln, Lebensmitteln (beispielsweise Milch und Milchprodukte, Säfte, Sirupe, Getränke) Trink- oder Abwässern, Bulk- oder Feinchemikalien, Photobioreaktoren. Ziele sind die Inaktivierung von Keimen, die Photosynthese oder photochemische Umsetzungen.

### Index der Abbildungen

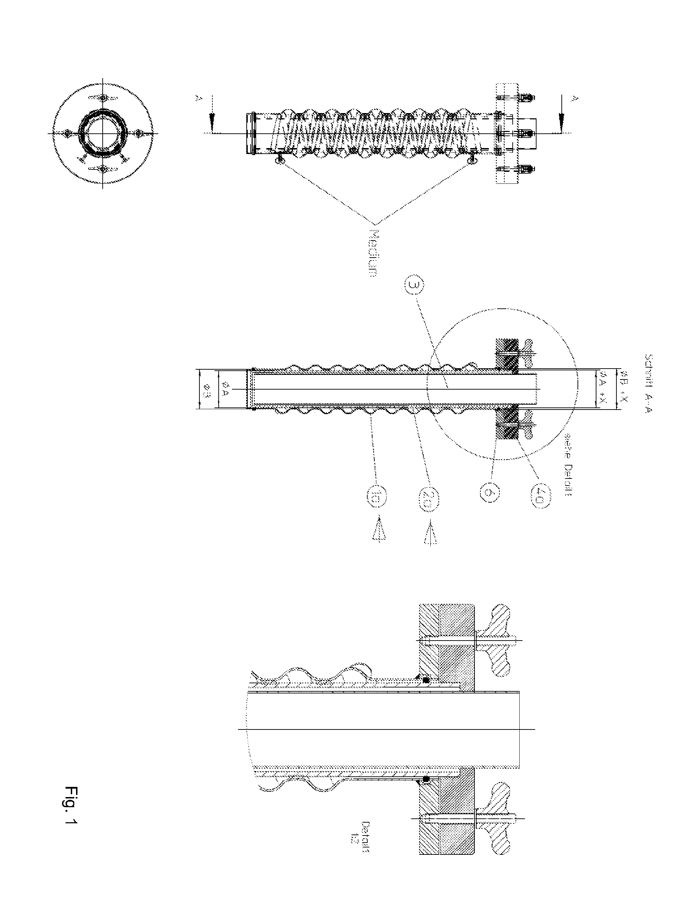

Fig. 1: Reaktorgehäuse als Kegelstumpf
Fig. 2: Reaktorgehäuse mit Doppelmantel

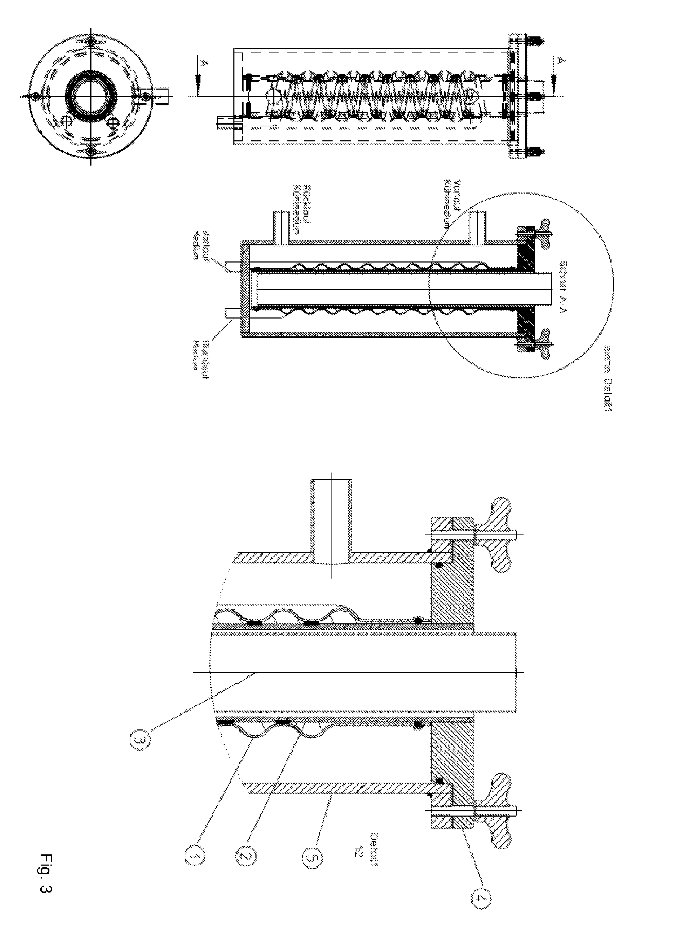

Fig. 3: Reaktorgehäuse mit mechanischer Geometrieverstellung

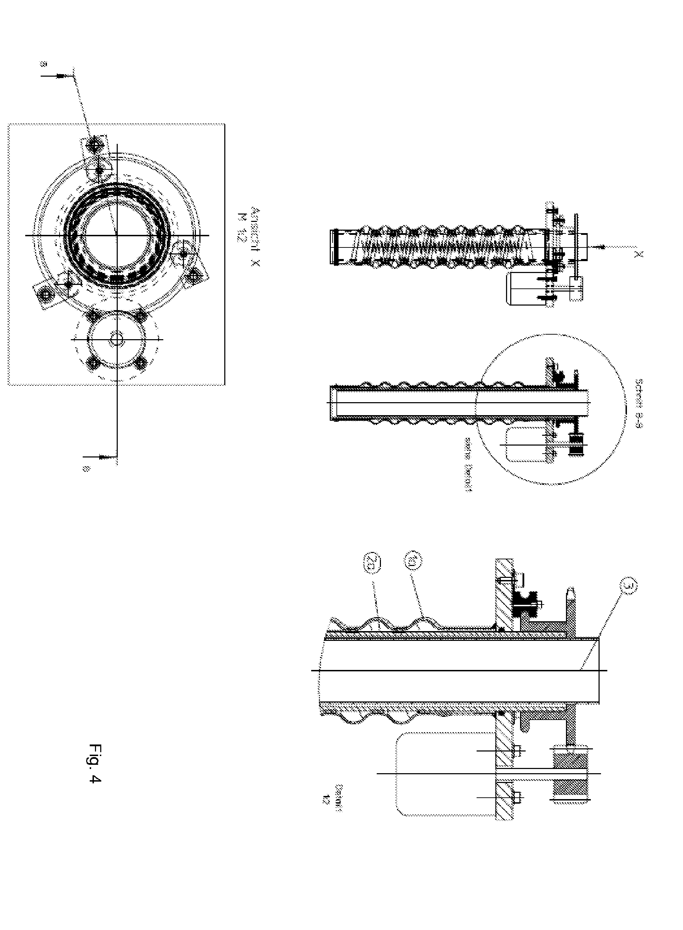

Fig. 4: Elektromotorische Hüllrohrverstellung

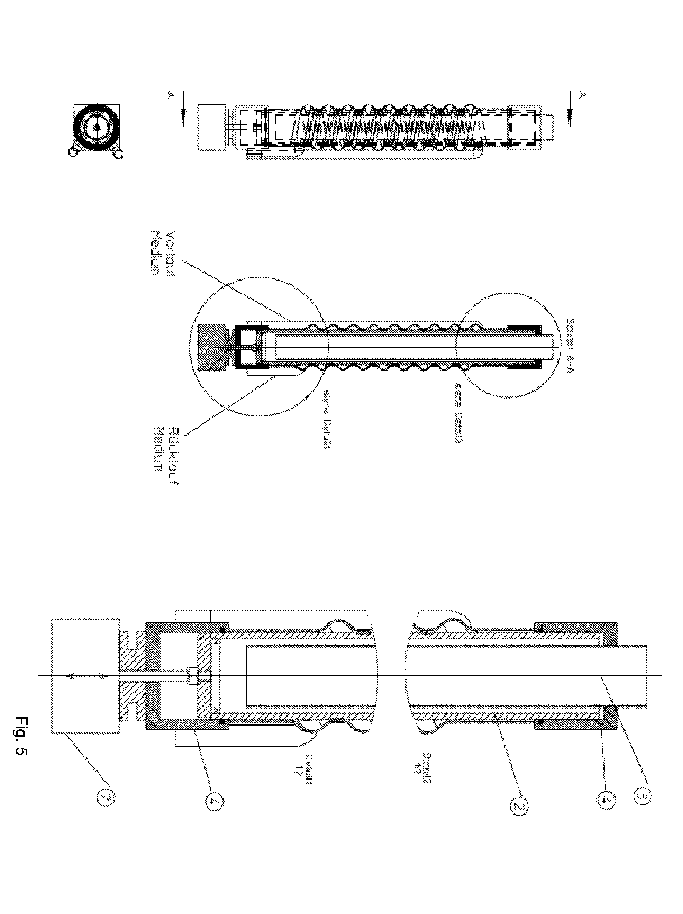

Fig. 5: Axiale Hüllrohrverstellung durch Hubzylinder

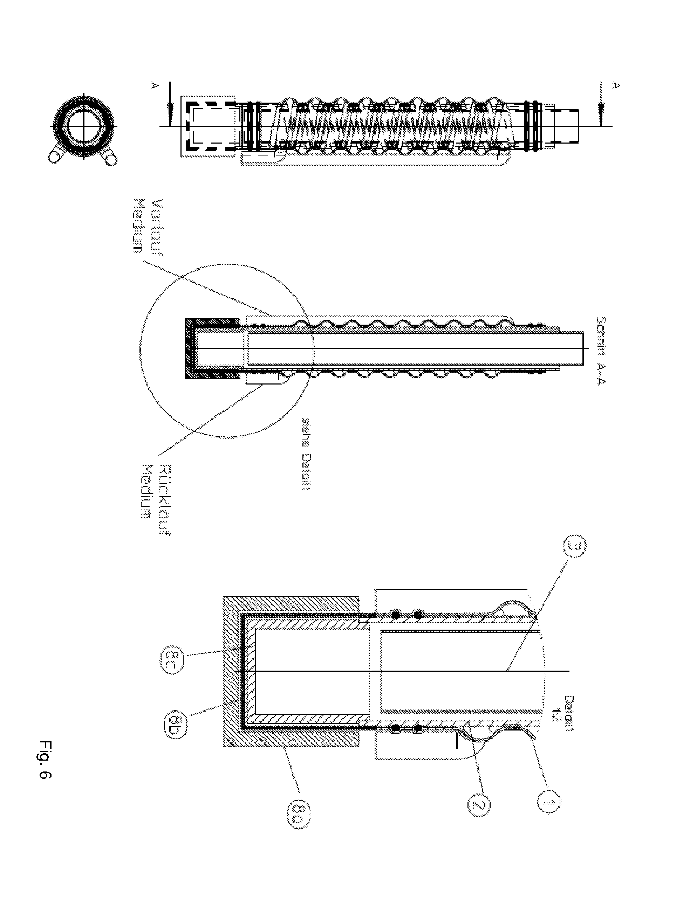

Fig. 6: Berührungslose elektromagnetische Hüllrohrverstellung

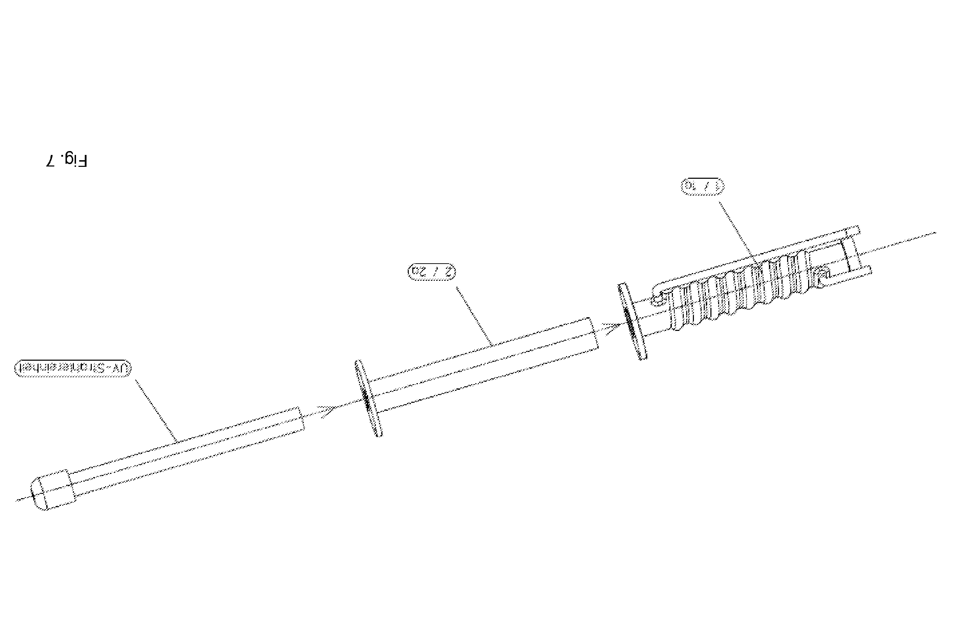

Fig. 7: Montage- Demontageübersicht
Fig. 8: Fouling auf Quarzglasoberfläche

Einzelpositionierungen:
Pos. 1 zylindrisches Reaktorgehäuse
Pos. 1 a konisches Reaktorgehäuse
Pos. 2 zylindrisches, UV-transparentes Hüllrohr
Pos. 2a konisches, UV-transparentes Hüllrohr
Pos. 3 UV-Strahlereinheit
Pos. 4 Hüllrohrflansch, dichtend
Pos. 4a Hüllrohrflansch, nicht dichtend
Pos. 5 Sekundärgehäuse
Pos. 6 Sekundärgehäuseflansch
Pos. 7 Hubzylinder mit Kolbenstange
Pos. 8a Außenring der Dauermagnetkupplung
Pos. 8b Spalttopf mit Reaktorgehäuse
Pos. 8c Innenrotor mit Hüllrohr verbunden.

### Beispiele

### Beispiel 1 (nicht erfindungsgemäß)

Es wurde aus 0,5 Liter handelsüblicher Milch mit 1,5% Fettgehalt und E.Coli Phagen vom Typ MS2 eine Lösung hergestellt. Der Phagentiter betrug mehr als 10⁷ Phagen/mL. Die Lösung wurde in Kreislauffahrweise bei einem Volumenstrom von 10 L/h durch ein Wendelmodul mit 24 mL Reaktionsvolumen geleitet. Das Modul bestand aus einem Quarzglasrohr über das formschlüssig ein Teflonwendelschlauch gezogen wurde. Zwischen Quarzglasrohr und Teflonschlauch bildet sich auf diese Weise ein wendelförmiger Kanal, durch den die Flüssigkeit geleitet werden kann. In dem Quarzglasrohr steckte eine 9W Quecksilber-Niederdrucklampe, die durch das Quarzglas hindurch die Lösung mit 35 W/m² bei der Wellenlänge von 254 nm bestrahlte.

Nach 30 min Bestrahlung wurde der Versuch abgebrochen und eine Probe der Lösung wurde in einer Soft-Agar-Methode mit E.Coli-Wirtszellen vermischt und auf eine Agar-Platte homogen aufgebracht. Nach einem Tag konnte auf dem Bakterienrasen kein Plaques, d.h. keine Phagen-Infektiösität, festgestellt werden. Durch die Bestrahlung konnte demnach eine vollständige Phagen-Inaktivierung erreicht werden.

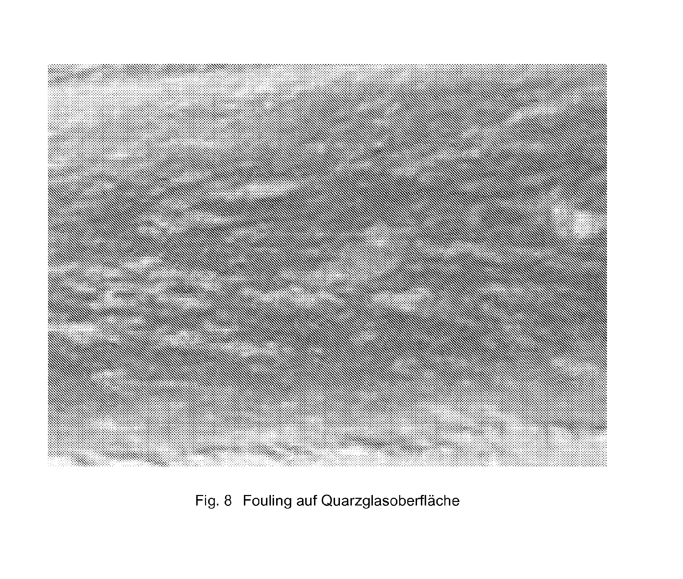

Das Wendelmodul wurde einer optischen Kontrolle unterzogen wobei eine deutliche Belagbildung der flüssigkeitsseitigen Quarzglasoberfläche beobachtet werden konnte (vergleiche Abbildung 8). Der Versuch die Oberfläche durch Spülen mit Flüssigkeiten wie Wasser, Seifenlauge, Glasreiniger oder NaOH zu reinigen war nicht erfolgreich.

Gleichzeitig konnte das Wendelmodul nicht zerstörungsfrei demontiert werden und somit die Oberfläche nicht mechanisch abgereinigt werden. Durch die Belagbildung verbietet sich eine Wiederverwendung des Moduls, da die UV Strahlung abgeschirmt wird und damit nicht an die Flüssigkeit gelangen kann.

### Beispiel 2 (erfindungsgemäß)

Ein identischer Versuch wurde nun mit einem erfindungsgemäßen Wendelmodul mit einem Quarzglasrohr und einer strahlungsundurchlässigen und demontierbaren Kunststoffwendel durchgeführt. Das biologische Ergebnis der vollständigen Inaktivierung der Phagen war identisch zum ersten Versuch. Ebenso waren vergleichbare Beläge auf der Quarzglasoberfläche vorhanden. Das erfindungsgemäße Modul wurde demontiert und so das Quarzglasrohr separiert. Die Quarzglasoberfläche konnte nun erfolgreich mechanisch, mit einem handelsüblichen Haushaltsschwamm und Glasreiniger, gereinigt werden. Nach erfolgreicher Reinigung wurde das Modul erneut montiert. Beschädigungen der Oberfläche waren nicht zu beobachten.

In einem Kontrollversuch, unter identischen Bedingungen, wurde erneut eine vollständige Inaktivierung der Phagen erreicht.

Das gereinigte Modul konnte so erfolgreich wiederverwendet werden.

## Patentansprüche

1. Verfahren zur Herstellung von Bestrahlungsmodulen, **dadurch gekennzeichnet, dass** der Mantel des Reaktorgehäuses (**1** oder **1a)** durch ein Innenhochdruckumformverfahren in einem Arbeitsgang hergestellt wird und die Anschlussteile, Bodenabschluss und Strömungsleitgeometrien ohne Zusatzwerkstoffe in einer Vorrichtung mit einem Laserschweißverfahren druckdicht mit dem Mantel verbunden werden.

2. Verfahren nach Anspruch 1, wobei für das Reaktorgehäuse Werkstoffe verwendet werden, die auch nach der Formgebung so flexibel sind, dass ein Anpressen durch mechanische, hydrostatische oder pneumatische Kräfte möglich ist.

3. Verfahren nach Anspruch 2, wobei das Mantels des Reaktorgehäuses **(1** oder **1a)** und ein Rohr (**2** oder **2a**) reversible zusammengepresst werden.

4. Verfahren nach Anspruch 3, wobei durch das Aufbringen eines höheren Druckes an der Außenseite des Mantels des Reaktorgehäuses **(1** oder **1a)** als auf der Innenseite wird die Dichtung auf ein Rohr (**2** oder **2a**) gedrückt wird.

5. Verfahren nach Anspruch 4, wobei der Druck durch das zu prozessierende Fluid selbst aufgebracht wird, das vor dem Eintritt in den Spalt zwischen den Mantel des Reaktorgehäuses **(1** oder **1a)** und das Rohr (**2** oder **2a**), an der Außenseite der Mantels des Reaktorgehäuses **(1** oder **1a)** vorbeigeführt wird.

6. Verfahren nach Anspruch 3, wobei dehnbaren Polymermaterialien für das Rohr (**2** oder **2a**) verwendet werden und durch Aufbringen einer hydraulischen oder mechanischen Kraft das Rohr (**2** oder **2a**) gegen den Mantel des Reaktorgehäuses (**1** oder **1a)** gedrückt wird.

7. Verfahren nach einem der Ansprüche 1 bis 6, wobei die Innenseite des Mantels des Reaktorgehäuses **(1** oder **1a)** mit einer PTFE-Beschichtung versehen ist.

8. Verfahren nach einem der Ansprüche 1 bis 7, wobei die Innenseite des Mantels des Reaktorgehäuses **(1** oder **1a)** von einem Kühlfluid umspült wird.
